# EUROPEAN PATENT SPECIFICATION

(11) **EP 0 267 732 B1**
(45) Date of publication and mention of the grant of the patent: **18.08.1993**
(21) Application number: 87309766.1
(22) Date of filing: 04.11.1987
(51) Int. Cl.: G06K 15/02, G06K 15/12, G06F 15/62

(54) **Character font converting system**
Schriftartumsetzungssystem
Système de conversion de police de caractères

(30) Priority: 06.11.1986 JP 265142/86
(43) Date of publication of application: 18.05.1988
(73) Proprietor: SHARP KABUSHIKI KAISHA, Osaka 545 (JP)
(72) Inventor: Yoshida, Kunio, Nara-shi Nara-ken (JP)
(74) Representative: Brown, Kenneth Richard

(56) References cited:
- EP-A- 0 106 354
- GB-A- 2 131 660
- US-A- 4 466 123
- IBM TECHNICAL DISCLOSURE BULLETIN, vol. 18, no. 8, January 1976, pages 2640-2642, New York, US; T.H. MORRIN: "Rotation of images using contour compressed data"

## Description

The present invention relates to a printer, and more particulary, to a character converting system of a printer.

A printer with a font memory which stores a character font prints the font (dot pattern) corresponding to the character.

In printing it is sometimes necessary to enlarge characters or to change the configuration of the characters, for example, to invert the characters. In such a case, it is necessary to convert the original character font to another font. In converting, conventionally, only the black dots are converted to obtain another font. However, even if the conversion is restricted only to the black dots, when the size of the specified font is big, or the number of the dots in the font is big, it takes a long time to obtain the new font, because the conversion must be made many times. From GB 2,131,660 A it is known to carry out conversion of characters by identifying and storing the characteristic points of the characters and then manipulating the characteristic points. Adjacent characteristic points then form the extrema of line segments, making up the converted character. However, this approach requires processing the data to identify the characteristic points, manipulating those characteristic points and then forming line segments between adjacent characteristic points. It is desirable to have a method which does not involve such a large amount of processing of the character data.

Accordingly, it is an object of the present invention to provide a character font converting system for converting the character font at a substantially high-speed.

In accordance with the present invention, there is provided, a character conversion system comprising means for processing positional data for respective elements of an original form of a character in order to provide positional data for the corresponding elements of a required converted form of said character. The conversion system is characterised by means for identifying the elements lying at the boundary of the original form of the character, and for causing the positional data processing to be performed only for those boundary elements.

A preferred embodiment of the invention, in which the elements of the original form of the character are located at matrix points of a two dimensional matrix, is characterised in that the identifying means is operable to identify as boundary elements those elements for which the neighbouring matrix points in two orthogonal directions of the matrix are not all occupied by elements of the character. A further preferred embodiment of the invention is characterised by there being provided means for filling in the area enclosed by the boundary defined by the converted boundary elements in the converted character form.

The present invention will become more fully understood from the detailed description given hereinbelow and the accompanying drawings which are given by way of illustration only, and thus are not limitative of the present invention and wherein:
Figs. 1 (a) (b) (c) (d) are views showing successively one example of a character font convert according to the present invention;
Fig. 2 is a view showing a coordinate convert when a font is rotated;
Fig. 3 (a) is a view showing an example of a dot pattern of a character font, and
Fig. 3 (b) is a partially enlarged view of Fig. (a); and
Fig. 4 is a block diagram of a character font convert circuit.

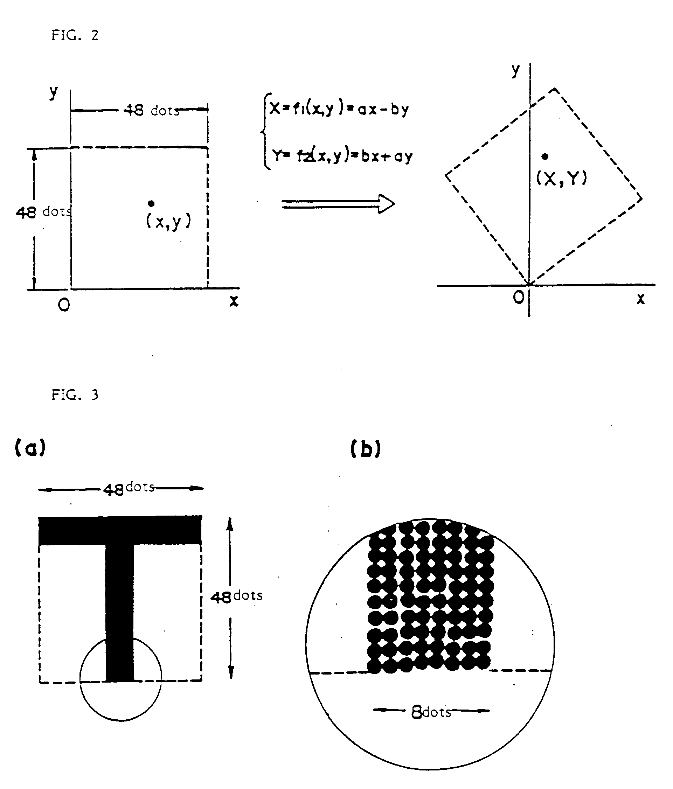

Generally when converting one font to another, a dot located at the point (x,y) on the given dot matrix is converted to a new font located at the point (X, Y) according to the following expressions (see FIG. 2):

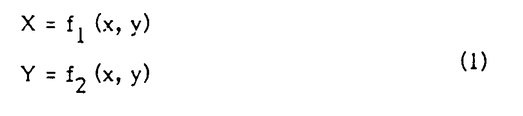

By making the point (X, Y) black if the point (x, y) is black, and making the point (X, Y) white if the point (x, y) is white, a new font is obtained according to f₁ (x, y) and f₂ (x, y).

For the purpose of simplification, it will be specifically described to rotate a character font in a dot matrix 48 dot x 48 dot.

When rotating, the point (X, Y) is obtained according to the following expressions:

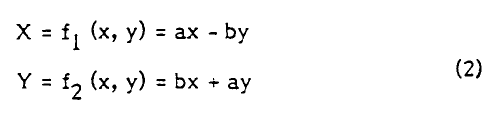

In this case, a and b are constants related to the rotation angle which satisfy the following expression:

$\text{a² + b² = 1 (3)}$

Accordingly, by plotting (X, Y) corresponding with (x, y), a new rotated font is obtained.

In case a font is expressed in a dot matrix 48 dot x 48 dot, while the conversion (2) may be done as for all dots contained (48 x 48 = 2304 dots), conventionally, for the purpose of reducing the processes, the conversion are made as for only the case (x, y) is a black dot. For example, a character shown in FIG. 3 contains 704 black dots, so 704-time processings are done instead of 2304-time processings.

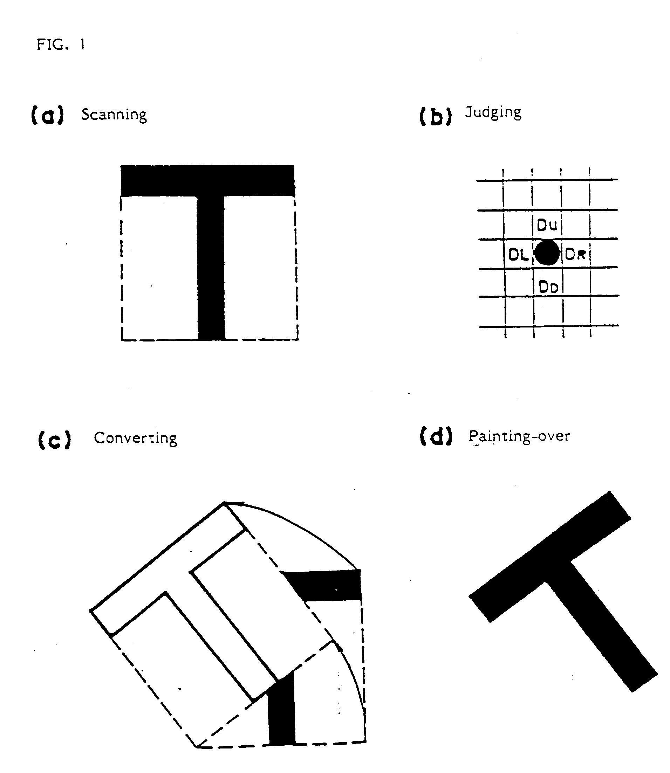

In this embodiment, the conversion is made according to the following steps:
1) The dot pattern of a character font (for example, "T" shown in FIG. 1 (a)) is scanned and only the black dots above or below or left or right of which is a white dot are detected and converted. Accordingly, the peripheral portion of the required font is made as shown in FIG. 1(c).
2) The inside of the above font is painted over as shown in FIG. 1(d).

In this embodiment shown in FIG. 2, only 186-time conversion is necessary while in a conventional method in which all the black dots are converted, as previously mentioned, 704-time conversion is necessary (186 is a number of the peripheral black dots). Time for painting over the inside is additionally required, but as a whole, a high-speed conversion is made because of the reduction of the convert processing, which takes much calculation time.

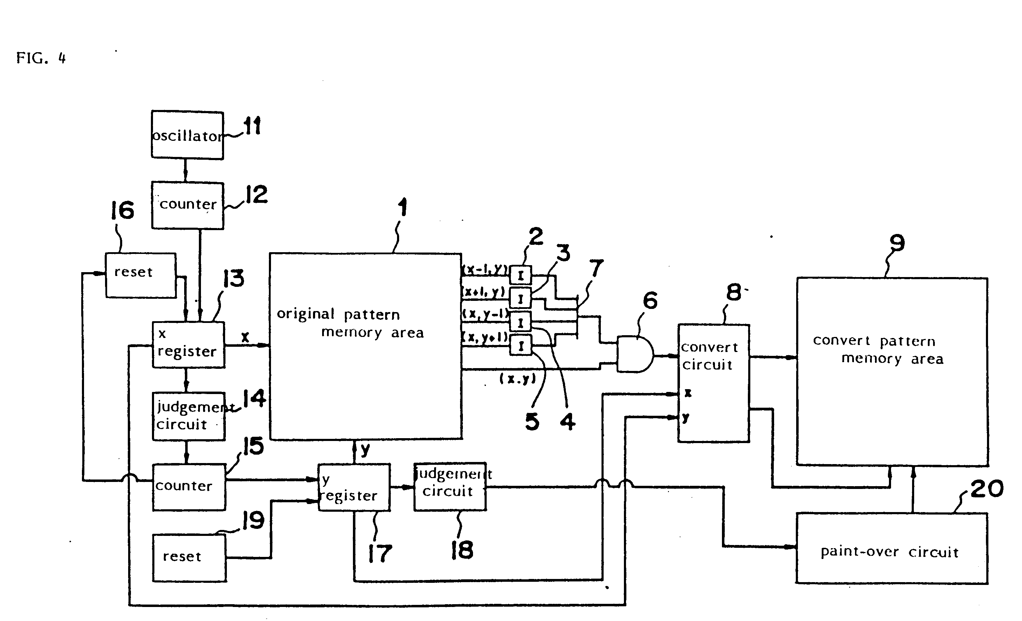

FIG. 4 is a block diagram of a font convert circuit. Original pattern memory area (Font memory) 1 is a memory which stores the original font. When a point (x, y) of the original pattern is given, whether the points $\text{(x-1, y)}$ , $\text{(x+1, y)}$ , $\text{(x, y- 1),}$ and ( $\text{x, y+1}$ ) are black or white are outputted to the inverters 2, 3, 4, and 5 respectively, while whether the point (x, y) is black or white is outputted to the AND gate 6 (In this embodiment, "1" is outputted when the dot is black and "0" is outputted when the dot is white). The output of the inverters 2 through 5 are outputted to the OR gate 7, and the output of the OR gate 7 is outputted to the AND gate 6. The output of the AND gate 6 is outputted to the convert circuit 8. Thus, at the AND gate 6, it is judged whether the dot (x, y) is black and further, at least one dot above, below, left, or right of the dot is white. If so, conversions f₁ (x, y) and f₂ (x, y) are made at the convert circuit 8 and the result is plotted at the area 9 which stores the convert pattern.

The point (x, y) is replaced successively as follows. In the present embodiment, the scan is made horizontally. The signal from the oscillator 11 is counted at the up counter 12 and stored at the x register 13. The output of the x register 13 is given as a coordinate x to the original pattern memory area 1. The output of the x register 13 is also inputted to the judgement circuit 14. When x > 48 (when the scan ends as for one line), the judgement circuit 14 sends its output to the up counter 15. The up counter 15 sends a signal to the reset circuit 16 and the reset circuit 16 resets the x register 13.

The output of the up counter 15 is sent to the y register 17. The output of y register 17 is given as a coordinate y to the original pattern memory area 1. The output of the y register 17 is also inputted to the judgement circuit 18. When y > 48 (when the scan ends as for all the dots), the judgement circuit 18 sends its output to the reset circuit 19 and the reset circuit 19 resets the y register 17.

The output of x register 13 and y register 17 are sent to the convert circuit 8 respectively. When a black dot (x, y) is at the periphery of the original pattern, the convert circuit 8 calculates the conversions f₁ (x, y) and f₂ (x, y) and the point (X, Y) stored in the convert pattern memory area 9 is made "1". When the scan ends as for all the dots, the judgement circuit 18 sends its output to the paint-over circuit 20. The paint-over circuit 20 starts painting over and makes the inside of the peripheral portion "1". The conversion of the font ends by the end of the painting over.

In this circuit, above, below, left or right of a dot (x, y) is added as conditions of the convert processing. Accordingly, the number of times of the conversion reduces and time for making a new font is shortened. This method is more effective when the number of black dots inside the peripheral portion of the font is more big, and when the caracter font has more dots, for example, 128 x 128 dots.

While only certain embodiments of the present invention have been described, it will be apparent to those skilled in the art that various changes and modifications may be made therein without departing from the scope of the present invention as claimed.

## Claims

1. A character conversion system comprising means for processing positional data for respective elements of an original form of a character in order to provide positional data for the corresponding elements of a required converted form of said character, characterised by means (2 to 7) for identifying the elements lying at the boundary of said original form of the character, and for causing said positional data processing to be performed only for those boundary elements.

2. A system according to claim 1 in which the elements of said original form of the character are located at matrix points of a two-dimensional matrix, characterised in that said identifying means is operable to identify as boundary elements those elements for which the neighbouring matrix points (Du, Dd, Dl, Dr) in two orthogonal directions of the matrix are not all occupied by elements of the character.

3. A system according to claim 1 or claim 2, characterised by means for filling in the area enclosed by the boundary defined by the converted boundary elements in the converted character form.

## Patentansprüche

1. Zeichenumsetzsystem mit einer Einrichtung zum Verarbeiten von Positionsdaten für jeweilige Elemente einer Ursprungsform eines Zeichens, um Positionsdaten für die entsprechenden Elemente einer geforderten umgewandelten Form des Zeichens zu erstellen; **gekennzeichnet durch** eine Einrichtung (2 bis 7) zum Identifizieren der an der Grenze der Ursprungsform des Zeichens liegenden Elemente und zum Bewirken, daß die Positionsdatenverarbeitung nur für die Grenzelemente ausgeführt wird.

2. System nach Anspruch 1, bei dem die Elemente der Ursprungsform des Zeichens auf Matrixpunkten einer zweidimensionalen Matrix liegen, **dadurch gekennzeichnet,** daß die Identifiziereinrichtung so betrieben werden kann, daß sie als Grenzelement diejenigen Elemente identifiziert, für die die benachbarten Matrixpunkte (Du, Dd, Dl, Dr) in zwei rechtwinklig aufeinander stehenden Richtungen der Matrix nicht alle von Elementen des Zeichens besetzt werden.

3. System nach Anspruch 1 oder Anspruch 2, **gekennzeichnet durch** eine Einrichtung zum Auffüllen des Bereichs, wie er von der Grenze umschlossen wird, die durch die umgesetzten Grenzelemente in der umgewandelten Zeichenform definiert wird.

## Revendications

1. Système de conversion de caractères comprenant des moyens pour traiter des données de position relatives à des éléments respectifs d'une forme originale d'un caractère afin de fournir des données de position relatives aux éléments correspondants d'une forme convertie requise dudit caractère, caractérisé par des moyens (2 à 7) pour identifier les éléments situés au niveau de la limite de ladite forme originale du caractère, et pour faire en sorte que le traitement desdites données de position ne soit effectué que pour ces éléments de limite.

2. Système selon la revendication 1, dans lequel les éléments de ladite forme originale du caractère sont situés au niveau de points matriciels d'une matrice à deux dimensions, caractérisé en ce que ledit moyen d'identification agit pour identifier, en tant qu'éléments de limite, les éléments pour lesquels les points matriciels voisins (Du, Dd, Dl, Dr) dans deux directions orthogonales de la matrice ne sont pas tous occupés par des éléments du caractère.

3. Système selon la revendication 1 ou la revendication 2, caractérisé par des moyens pour garnir la zone enclose par la limite définie par les éléments de limite convertis de la forme de caractère convertie.
